**Europäisches Patentamt**

**European Patent Office**

**Office européen des brevets**

(19)

(11) Veröffentlichungsnummer: **0 380 786**
**A2**

## (12) EUROPÄISCHE PATENTANMELDUNG

(21) Anmeldenummer: 89122523.7

(22) Anmeldetag: 06.12.89

(51) Int. Cl.⁵: **H04M 1/274, H04M 1/21**

(30) Priorität: 28.01.89 DE 3902583

(43) Veröffentlichungstag der Anmeldung:
08.08.90 Patentblatt 90/32

(84) Benannte Vertragsstaaten:
**AT BE CH DE ES FR GB GR IT LI LU NL SE**

(71) Anmelder: **Exim Design Handelsgesellschaft mbH**
**Neumannstrasse 2**
**D-4000 Düsseldorf 1(DE)**

(72) Erfinder: **Ng, Cody c/o Amco Intern. Trading Co.**
**Wah Hing Industrial Mansions**
**36 Thi Yau St. 1st. F1 San Po Kong(HK)**

(74) Vertreter: **Patentanwaltsbüro Cohausz & Florack**
**Schumannstrasse 97**
**D-4000 Düsseldorf 1(DE)**

(54) **Telefonregister.**

(57) Die Erfindung betrifft ein Telefonregister mit einem Gehäuse, in dem eine Registerkarten enthaltende Schublade gegen eine Feder einschiebbar und auf wahlweisen Fingerdruck auf eines von mehreren Hebelenden selbsttätig durch die Feder herausschiebbar ist, wobei oberhalb der Enden der Hebel eine flexible Folie 6 oder ein flexibles Tuch auswechselbar liegt, die bzw. das in den Druckbereichen Schriftzeichen aufweist, und daß am Rand der Folie 6 oder des Tuches in regelmäßigen Abständen Löcher 8 sind, in die Vorsprünge, insbesondere Zapfen des Gehäuses hineinragen.

Fig. 2

EP 0 380 786 A2

## Telefonregister

Die Erfindung betrifft ein Telefonregister mit einem Gehäuse, in dem eine Registerkarten enthaltende Schublade gegen eine Feder einschiebbar und auf wahlweisen Fingerdruck auf eines von mehreren Hebelenden selbsttätig herausschiebbar ist, wobei ein Blatt mit Schriftzeichen für die Schubladen befestigt ist.

Es sind Telefonregister bekannt, die oberhalb der Schublade ein Tastenfeld aufweisen, deren Tasten mit dem Buchstaben des Alphabets beschriftet sind und über die die Hebelenden wahlweise betätigt werden können. Wird eine dieser Tasten gedrückt, so wird der entsprechende Hebel innerhalb des Telefonregistergehäuses verschwenkt und dies führt nicht nur zu einem Herausfahren der Schublade durch Federdruck, sondern auch dazu, daß ein Teil der Registerkarten innerhalb des Gehäuses zurückgehalten wird und die dann zuoberst in der Schublade liegende Karte den Buchstaben entspricht, die auf der Taste verzeichnet sind. Das Aufbringen der Buchstaben auf die Tasten ist in der Herstellung aufwendig und ein Ändern der Buchstaben ist für den Benutzer nicht möglich. Auch bedeutet ein Ändern der Buchstaben pro Taste durch andere Zeichen für den Hersteller einen erheblichen Aufwand.

Aufgabe der Erfindung ist es, ein Telefonregister der eingangs genannten Art so zu verbessern, daß die Beschriftung der Tasten bzw. der Druckfelder jederzeit leicht änderbar ist und der Träger der Tasten bei einfacher Montage und sicherem Halt eine hohe Flexibilität aufweist.

Diese Aufgabe wird erfindungsgemäß dadurch gelöst, daß oberhalb der Enden der Hebel eine Folie oder ein Tuch auswechselbar liegt, die bzw. das in den Druckbereichen Schriftzeichen aufweist und daß am Rand der Folie oder des Tuches in regelmäßigen Abständen Löcher sind, in die Vorsprünge, insbesondere Zapfen des Gehäuses hineinragen.

Bei einem solchen Register kann die Folie oder das Tuch jederzeit vom Hersteller als auch vom Benutzer leicht gegen eine anders beschriftete Folie oder ein anders beschriftetes Tuch ausgewechselt werden, so daß das Register zu den verschiedensten Zwecken genutzt werden kann und den unterschiedlichsten Ansprüchen gerecht wird. So können die Buchstaben pro Tastenfeld der jeweiligen Häufigkeit der Worte einer Sprache angepaßt werden, so daß das Telefonregister der jeweiligen Landessprache auf einfachste Weise anpaßbar ist. Auch sind andere Schriftzeichen bzw. Buchstaben leicht verwendbar und ferner können statt Buchstaben Zahlen oder Sonderzeichen benutzt werden. Die Farbe der Folie oder des Tuches kann den jeweiligen Wünschen angepaßt werden und Farbe als auch Schriftzeichen können den verschiedensten modischen Richtungen folgen. Besonders vorteilhaft ist es, daß am Rand der Folie oder des Tuches in regelmäßigen Abständen Löcher sind, in die Vorsprünge, insbesondere Zapfen des Gehäuses hineinragen. Hierdurch wird sicher verhindert, daß die Folie unverrutschbar liegt und dennoch der Rand in Teilbereichen nachgeben kann, um die Flexibilität zu erhöhen. Hierzu sollten die Löcher jeweils in Höhe des Zwischenraumes zwischen zwei Druckbereichen angeordnet sind.

Besonders vorteilhaft ist es, wenn die Rückseite der Folie oder Tuches eine von der Vorderseite unterschiedliche Beschriftung aufweist, da auf diese Weise bereits zwei unterschiedliche Beschriftungen dem Benutzer angeboten werden können. Hierbei ist es auch möglich, daß auf der Vorderseite der länglichen Folie oder Tuches die Beschriftung von der Längsseite und auf der Rückseite von der Schmalseite lesbar sind. Damit können zwei unterschiedliche Ablesrichtungen geschaffen werden, so daß das Register auch um 90° verdreht vom Benutzer verwendet werden kann.

Ein sicherer Halt der Folie oder des Tuches als auch ein leichtes Auswechseln ist dann erreichbar, wenn die Folie oder das Tuch an der Oberseite durch einen abnehmbaren Rahmen gehalten ist. Vorzugsweise wird vorgeschlagen, daß unterhalb der Folie oder des Tuches eine Lochplatte liegt, durch deren Löcher die Hebelenden betätigbar sind. Ferner können unterhalb der Folie oder des Tuches Tasten angeordnet sein.

Ein Ausführungsbeispiel der Erfindung ist in der Zeichnung dargestellt und wird im folgenden näher beschrieben. Es zeigen:

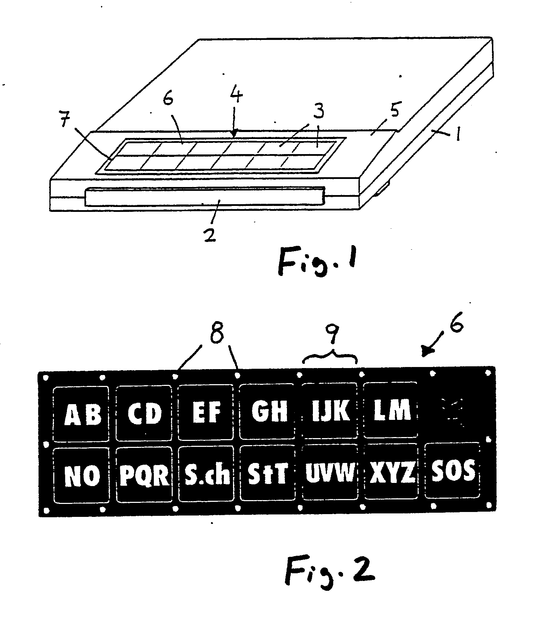

Fig. 1 eine perspektivische Ansicht des Registers,

Fig. 2 eine Draufsicht auf die Folie bzw. das Tuch.

Das Telefonregister weist ein quaderförmiges Gehäuse 1 auf, dessen Höhe verhältnismäßig gering ist. An der Vorderseite des Gehäuses liegt eine Schublade 2 verschieblich ein, die durch eine innere Feder nach außen geschoben wird, wenn von Hand eines der Felder 3 des Tastenfeldes 4 gedrückt wird. Hierbei befindet sich das Tastenfeld 4 auf einer Fläche 5, die pultförmig zur Vorderseite des Gehäuses 1 abfällt.

Die Oberseite des Tastenfeldes 4 wird von einer flexiblen Folie 6 oder einem Gummituch gebildet, das rings um an an den vier Rändern in regelmäßigen Abständen Löcher (Öffnungen) 8 aufweist, in die zapfenförmige Vorsprünge des Gehäuses von unten hineinragen. Die Löcher 8 sind jeweils in Höhe des Zwischenraumes zwischen zwei Druckbereichen angeordnet, so daß der Randbereich 9 zwischen zwei Löchern 8 nachgeben kann. Damit die Folie 6 bzw. das Tuch nach oben nicht abheben kann ist sie bzw. es rundum durch einen Rahmen 7 gehalten. Der Rahmen 7 ist durch Klemm- oder Rastwirkung am Gehäuse 1 befestigt und kann von Hand leicht entfernt werden, so daß nach Abnahme des Rahmens 7 die Folie bzw. das Tuch hochgehoben und durch eine andere Folie ersetzt werden kann.

Unterhalb der Folie 6 bzw. des Tuches sind Druckfelder, insbesondere einer Lochplatte oder in Form der Enden von Hebeln, die innerhalb des Gehäuses 1 liegen. Wird durch die Folie oder das Tuch hindurch das Druckfeld betätigt, so wird die Schublade 2 durch eine Feder nach außen geschoben und es werden eine bestimmte Anzahl von Registerkarten im Gehäuse 1 festgehalten, so daß die Registerkarte zuoberst in der Schublade 2 liegt, die dem gedrückten Tastenfeld entspricht.

Die Rückseite der Folie oder des Tuches kann eine von der Vorderseite unterschiedliche Beschriftung aufweisen, so daß durch Lieferung nur einer Folie oder eines Tuches schon bereits zwei unterschiedliche Beschriftungen verwendet werden können. Hierbei ist auch von Vorteil, wenn auf der Vorderseite der länglichen Folie oder Tuches die Beschriftung von der Längsseite und auf der Rückseite von der Schmalseite lesbar sind.

Unterhalb der Folie 6 oder des Tuches können Tasten gelagert sein, unterhalb derer die Enden der Hebel sich befinden. Diese Tasten können aber auch weggelassen werden, wenn die Hebelenden bis etwa zur Unterseite der Folie oder des Tuches ragen. Die beschrifteten Felder der Folie oder des Tuches entsprechen den Hebelenden, den Tasten oder den Löchern der darunter befindlichen Lochplatte. Die Beschriftungen der Folie oder des Tuches im Bereich dieser Felder kann sehr unterschiedlich sein und es können einem Telefonregister mehrere unterschiedlich beschriftete Tücher oder Folien beigelegt sein. Auch ist eine Beschriftung durch den Benutzer selber möglich, wenn eines der Folien oder Tücher unbeschriftet mitgeliefert wird.

## Ansprüche

1. Telefonregister mit einem Gehäuse, in dem eine Registerkarten enthaltende Schublade gegen eine Feder einschiebbar und auf wahlweisen Fingerdruck auf eines von mehreren Hebelenden selbsttätig durch die Feder herausschiebbar ist, **dadurch gekennzeichnet,** daß oberhalb der Enden der Hebel eine flexible Folie (6) oder ein flexibles Tuch auswechselbar liegt, die bzw. das in den Druckbereichen Schriftzeichen aufweist, und daß am Rand der Folie (6) oder des Tuches in regelmäßigen Abständen Löcher (8) sind, in die Vorsprünge, insbesondere Zapfen des Gehäuses hineinragen.

2. Telefonregister nach Anspruch 1, **dadurch gekennzeichnet,** daß die Löcher (8) jeweils in Höhe des Zwischenraumes zwischen zwei Druckbereichen angeordnet sind.

3. Telefonregister nach Anspruch 1 oder 2, **dadurch gekennzeichnet,** daß die Rückseite der Folie (6) oder Tuches eine von der Vorderseit unterschiedliche Beschriftung aufweist.

4. Telefonregister nach Anspruch 3, **dadurch gekennzeichnet,** daß auf der Vorderseite der länglichen Folie (6) oder Tuches die Beschriftung von der Längsseite und uf der Rückseite von der Schmalseite lesbar sind.

5. Telefonregister nach einem der vorherigen Ansprüche, **dadurch gekennzeichnet,** daß die Folie (6) oder das Tuch an der Oberseite durch einen abnehmbaren Rahmen (7) gehalten ist, der die Löcher (8) verdeckt.

Fig. 1

| AB | CD | EF | GH | IJK | LM | |
| NO | PQR | S.ch | StT | UVW | XYZ | SOS |

Fig. 2